Europäisches Patentamt

European Patent Office

Office européen des brevets

(11) Publication number: **0 075 361**

**B1**

## (12) EUROPEAN PATENT SPECIFICATION

(45) Date of publication of patent specification: **31.07.85**

(21) Application number: **82201134.2**

(22) Date of filing: **14.09.82**

(51) Int. Cl.⁴: **A 01 K 11/00, A 22 C 17/10**

(54) Device for applying symbols to an object, particularly for branding living or dead animals.

(30) Priority: **17.09.81 NL 8104289**

(43) Date of publication of application:
**30.03.83 Bulletin 83/13**

(45) Publication of the grant of the patent:
**31.07.85 Bulletin 85/31**

(84) Designated Contracting States:
**AT BE CH DE FR GB IT LI LU NL SE**

(56) References cited:
**DE-A-2 855 981**
**DE-B-1 056 304**

(73) Proprietor: **van Elsen, Johannes Joseph Maria**
**Dr. Kuyperlaan 9**
**NL-3445 CK Woerden (NL)**

(72) Inventor: **van Elsen, Johannes Joseph Maria**
**Dr. Kuyperlaan 9**
**NL-3445 CK Woerden (NL)**

(74) Representative: **van der Beek, George Frans, Ir.**
**et al**
**Nederlandsch Octrooibureau P.O. Box 29720**
**NL-2502 LS The Hague (NL)**

## Description

The invention relates to a device for applying symbols to the skin or outer surface of a living or dead animal or part of the latter respectively, said device having a stamping member provided with individual symbol elements, which each through a control member and/or a switching member can be connected to a source of electric energy such that from a combination of symbol elements a symbol can be made and applied upon the skin or the like surface.

A device of this type is known from DE—A—2 855 981. In said known device each symbol element by means of electric resistant heating has to be heated to the temperature required for burning the symbol into the skin of the animal. Heating each element up to the required temperature takes time.

The cooling down of the elements also takes time and said cooling down is necessary to avoid wrong symbols.

In slaughter houses with a high production the known device cannot be used because it operates too slowly.

The purpose of the invention is to provide a device by means of which the application of symbols can take place with high speed.

According to the invention this purpose is achieved in that the source of electric energy is a high frequency power source, which converts the subcutaneous albumen or the albumen in the animal's skin or meat surface respectively.

Using high frequency has a number of advantages. The symbol elements are not heated and accordingly need not cool down before another figure of symbol is made. The animals are accordingly not subjected to pain resulting from the branding according to the prior art. The high frequency changes the structure of the skin and the layer immediately below it resulting in a colour change making said part usually lighter in colour than the original colour of the skin.

It is observed that high frequency generators are known in itself, e.g. from DE—A—1 056 304 for welding thermoplastic materials upon each other.

The invention will now be described more fully with reference to the drawing in which,

Fig. 1 is a simplified block diagram of the device embodying the invention and

Fig. 2 shows an embodiment of the stamping element of the stamping member of Fig. 1.

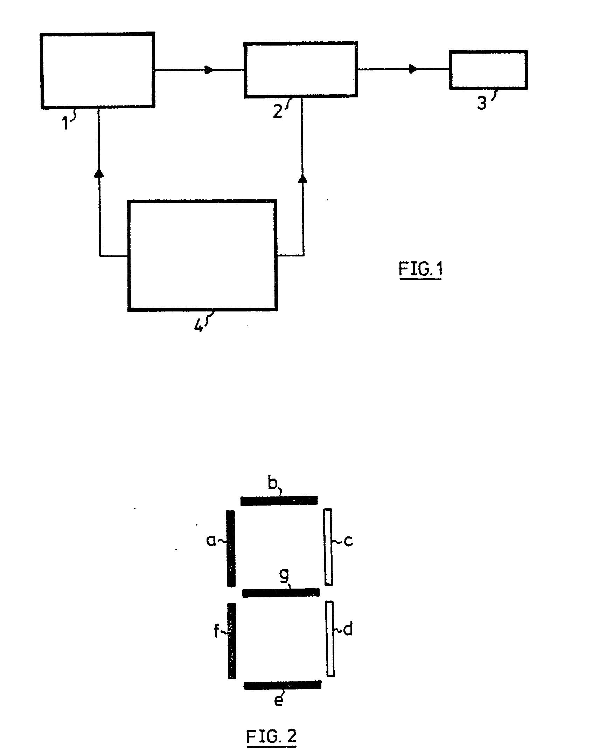

Fig. 1 shows a simplified block diagram of an embodiment of the device according to the invention for applying symbols to an object, particularly for branding animals. Reference numeral 1 designates a high-frequency power source, for example, a high-frequency generator for a high-frequency power transmitter. Reference numeral 2 designates a switching member connected to the output of high-frequency power source and having its output connected to a stamping member 3, which comprises at least one stamping element consisting of a plurality of relatively separated segments arranged in a holder of refractory, electrically insulating material. The segments are electrically connected to the switching member 2. Finally reference numeral 4 designates a control-member which is connected to the switching member 2 and may be connected to the high-frequency power source in order to switch on the high-frequency generator for a given time in synchronism with the actuation of the switching member 2. The latter operation is preferred though it is not necessary. The high-frequency power source 1 may, as an alternative, be actuated by means of a separate switch.

A suitable high-frequency power source for the stamping member comprising four stamping elements, the segments of which are arranged in the form of the digit 8 in the holder in analogy with the segments of a 7-segment reproducing member as shown in Fig. 2, is a high-frequency generator having a power of 1 kW and a frequency of 3.5 MHz. The frequency may however, be chosen in a wide range and the maximum power to be supplied depends on the type of stamping member used and the number of stamping elements employed therein. If the output impedance of the high-frequency generator is high, the animals should be grounded, which may be done by grounding the hooks on which the animals are suspended. With a given type of high-frequency generator it has been found that when the output impedance does not exceed 50 Ohm, grounding is not necessary.

Fig. 2 shows a stamping element of a potential stamping member. In particular, segments a to g are shown, which are arranged in a holder of, for example, ceramic material (not shown). When the power of the high-frequency source is transmitted by the switching member 2 to the segments a, b, e, f and g, which is illustrated by filling up these segments in contrast to the segments c and d, the digit 3 is branded on the skin of the animal to which the stamping member 3 is applied. It is assumed that branding by the supply of high-frequency power results from the conversion of subcutaneous albumen or the albumen in the animal's skin.

Although Fig. 2 shows that the segments of a stamping element of the stamping member 3 are separately arranged in the form of the digit 8 in a refractory, electrically insulating holder, the segments of each stamping element of the stamping member may be arranged in a matrix in the holder in analogy with those of known α-numerical reproducing members. Both the embodiment shown in Fig. 2 and the first-mentioned embodiment permit of branding characters.

The control-member may be a microprocessor connected to a keyboard by means of which the symbols to be applied can be chosen, whilst the switching member is controlled by the microprocessor so that the stamping member is selectively energized for applying the chosen symbols.

In the simplest form the switching member 2 and the control-member 4 may consist of a plurality of switches. The advantage of forming the control-member 4 by a microprocessor is that the marks to be used can be instantaneously changed.

The figures used in the claims are only meant to explain more clearly the intention of the invention and are not supposed to be any restriction concerning the interpretation of the invention.

## Claims

1. A device for applying symbols to the skin or outer surface of a living or dead animal or part of the latter respectively, said device having a stamping member (3) provided with individual symbol elements (a—g), which each through a control member (4) and/or a switching member (2) can be connected to a source of electric energy such that from a combination of symbol elements a symbol can be made and applied upon the skin or the like surface, characterized in that the source of electric energy (1) is a high frequency power source, which converts the subcutaneous albumen or the albumen in the animal's skin or meat surface respectively.

2. A device as claimed in claim 1 characterized in that the control member (4) comprises a microprocessor and a keyboard connected with the latter, by means of which keyboard the symbols to be applied can be chosen and in that the switching member (2) and/or the source are controlled by the microprocessor so that the stamping member is energized for applying the selected symbols.

3. A device as claimed in anyone of the preceding Claims characterized in that the source (1) is a high-frequency generator and in that the control member (4) comprises means for switching on the high-freuency generator for a given time in synchronism with the actuation of the switching member.

4. A device as claimed in Claim 3 characterized in that the high-frequency generator is a high-frequency power transmitter.

5. A device as claimed in anyone of the preceding Claims characterized in that the stamping member comprises at least one stamping element, which comprises a holder of refractory and electrically insulating material in which a plurality of segments are arranged separately, a selective actuation of the segments providing a desired symbol.

6. A device as claimed in Claim 5 characterized in that the holder of each stamping element of the stamping member is made from ceramic material.

7. A device as claimed in Claim 5 or 6 characterized in that the segments of each stamping element of the stamping member are arranged in the form of the digit 8 in the holder in analogy with the segments of a 7-segment reproducing member.

8. A device as claimed in Claims 5 or 6 characterized in that the segments of each stamping element of the stamping member are arranged in a matrix in the holder in analogy with those of known α-numerical reproducing members.

## Revendications

1. Dispositif pour l'application de symboles sur la peau ou la surface extérieure d'un animal vivant ou mort ou une partie d'animal mort, ce dispositif comportant un organe de marquage (3) pourvu d'éléments de symboles individuels (a à g) qui peuvent être reliés chacun, par l'intermédiaire d'un organe de commande (4) et/ou d'un organe de commutation (2), à une source d'énergie électrique de façon qu'un symbole puisse être formé avec une combinaison d'éléments de symboles et appliqué sur la peau ou lasurface analogue, caractérisé par le fait que la source d'énergie électrique (1) est une source d'énergie à haute fréquence qui transforme l'albumine sous-cutanée ou l'albumine contenue dans la peau ou la surface de la chair de l'animal.

2. Dispositif selon la revendication 1, caractérisé par le fait que l'organe de commande (4) comprend un microprocesseur et un clavier relié á celui-ci qui permet de choisir les symboles à appliquer, et que l'organe de commutation (2) et/ou la source sont commandés par le microprocessur de façon que l'organe de marquage soit alimenté pour l'application des symboles choisis.

3. Dispositif selon l'une quelconque des revendications précédentes, caractérisé par le fait que la source (1) est un générateur à haute fréquence et que l'organe de commande (4) comprend des moyens de mise en circuit de ce générateur à haute fréquence pour une durée donnée en synchronisme avec l'actionnement de l'organe de commutation.

4. Dispositif selon la revendicationc3, caractérisé par le fait que le générateur à haute fréquence est un émetteur d'énergie à haute fréquence.

5. Dispositif selon l'une quelconque des revendications précédentes, caractérisé par le fait que l'organe de marquage comprend au moins un élément de marquage qui comprend un support en matière réfractaire et isolante dans lequel sont disposés séparément une série de segments, un actionnement sélectif de ces segments fournissant le symbole désiré.

6. Dispositif selon la revendication 5, caractérisé par le fait que le support de chaque élément de marquage de l'organe de marquage est en matière céramique.

7. Dispositif selon l'une des revendications 5 et 6, caractérisé par le fait que les segments de chaque élément de marquage de l'organe de marquage sont disposés dans le support de façon à former le chiffre 8 de manière analogue aux segments d'un organe de reproduction à 7 segments.

8. Dispositif selon l'une des revendications 5 et 6, caractérisé par le fait que les segments de chaque élément de marquage de l'organe de marquage sont disposés dans le support sous forme de matrice de manière analogue à ceux des organes de reproduction alphanumériques connus.

**Patentansprüche**

1. Vorrichtung zum Aufbringen von Kennzeichen auf der Haut oder Oberfläche eines lebenden oder toten Tieres oder einem Teil der letzteren mit einem Stempelorgan (3), das mit einzelnen Kennzeichenelementen (a—g) versehen ist, die jeweils über ein Steuerorgan (4) und/oder ein Schaltorgan (2) mit einer elektrischen Energiequelle verbunden werden können, derart, daß aus einer Kombination von Kennzeichenelementen ein Kennzeichen erzeugt und auf die Haut oder eine ähnliche Oberfläche aufgebracht werden kann, dadurch gekennzeichnet, daß die elektrische Energiequelle (1) eine Hochfrequenzenergiequelle ist, welche das subkutane Eiweiß oder das Eiweiß in der Haut des Tieres bzw. der Oberfläche der Fleisches umwandelt.

2. Vorrichtung nach Anspruch 1, dadurch gekennzeichnet, daß das Steuerorgan (4) aus einem Mikroprozessor und einer mit diesem verbundenen Tastatur besteht, wobei mittels der Tastatur die anzubringenden Kennzeichen ausgewählt werden können, und daß das Schaltorgan (2) und/oder die Quelle durch den Mikroprozessor gesteuert sind, so daß das Stempelorgan zum Anbringen der ausgewählten Kennzeichen erregt wird.

3. Vorrichtung nach einem der vorhergehenden Ansprüche, dadurch gekennzeichnet, daß die Quelle (1) ein Hochfrequenzgenerator ist und daß das Steuerorgan (4) aus Mitteln zum Einschalten des Hochfrequenzgenerators für eine gegebene Zeit synchron mit der Betätigung des Schaltorgans besteht.

4. Vorrichtung nach Anspruch 3, dadurch gekennzeichnet, daß der Hochfrequenzgenerator ein Hochfrequenzenergiesender ist.

5. Vorrichtung nach einem der vorhergehenden Ansprüche, dadurch gekennzeichnet, daß das Stempelorgan aus mindestens einem Stempelelement besteht, das sich aus einem hitzebeständigen und elektrisch isolierenden Material zusammensetzt, in welchem mehrere Segmente getrennt angeordnet sind, wobei eine selektive Betätigung der Segmente ein gewünschtes Kennzeichen hervorruft.

6. Vorrichtung nach Anspruch 5, dadurch gekennzeichnet, daß der Halter jedes Stempelelements des Stempelorgans aus keramischem Material hergestellt ist.

7. Vorrichtung nach Anspruch 5 oder 6, dadurch gekennzeichnet, daß die Segmente jedes Stempelelements des Stempelorgans in der Form der Zahl 8 in dem Halter analog zu den Segmenten eines aus sieben Segmenten bestehenden Wiedergabeorgans angeordnet sind.

8. Vorrichtung nach den Ansprüchen 5 oder 6, dadurch gekennzeichnet, daß die Segmente jedes Stempelelements des Stempelorgans in einer Matrize in dem Halter in Analogie zu denjenigen angeordnet ist, die als α-numerische Wiedergabeorgane bekannt sind.

FIG.1

FIG. 2